# EUROPEAN PATENT APPLICATION

(11) **EP 2 595 401 A1**
(43) Date of publication of application: **22.05.2013**
(21) Application number: 11306488.5
(22) Date of filing: 15.11.2011
(51) Int. Cl.: H04N 21/422, G08C 23/02

(54) **Multimedia device, multimedia environment and method for controlling a multimedia device in a multimedia environment**

(71) Applicant: Thomson Licensing, 92130 Issy-les-Moulineaux (FR)
(72) Inventor: Alleaume, Vincent, 35000 Rennes (FR); Jouet, Pierrick, 35000 Rennes (FR); Le Clerc, Francois, 35590 L'Hermitage (FR)
(74) Representative: Thies, Stephan

(57) **Abstract**

There is a multimedia device 4, a multimedia environment 2 and a method for controlling the multimedia device 4. The multimedia environment 2 further comprises a sensor 6 for acquisition of audio and/or video information. The multimedia device 4 is configured to perform gesture and or speech recognition based on the acquired audio and/or video information. A wake-up event that is assigned to activation of the multimedia device 4 and is initiated by a user 18 of the multimedia environment 2 is detected based on acquired audio and/or video information. The multimedia device 4 is set to an active state upon the detection of the wake-up event. Further, a position 24 of the user 22 in the multimedia environment 2 is determined. A viewing direction 26 of the user 22 may further be detected. The filtered gesture recognition is performed based on subsequently acquired video information wherein the step of filtering takes into account the determined position 24 and the determined viewing direction 26 of the user 22.

## Description

### FIELD OF THE INVENTION

The invention relates to a method for controlling a multimedia device in a multimedia environment, to a multimedia device for use in a multimedia environment and to a multimedia environment comprising a display device and a multimedia device.

### BACKGROUND

Our modern everyday environment is more and more populated with a multitude of intelligent devices. For example, a modern living room has become a multimedia environment, typically featuring a television, a hi-fi system, a DVD or Blu-ray player, etc. For control of these multimedia devices, it is very common to have a plurality of remote controls. Even we are familiar with this situation, it is not a satisfactory solution and more intelligent user interfaces (also referred to as human machine interfaces) are needed. One technical approach is to establish a human machine interface based on gesture recognition and/or voice recognition.

Document US 7,721,231 B2 discloses a method for controlling electronic devices in a ubiquitous computing environment. Input to this control system is based on gesture recognition. The disclosed method exploits the fact that it has become almost second nature to the users to point to an object he or she wants to control. Obviously, this behavior is due to the extensive presence of IR-remote controls, which favor a "face-to-face" arrangement with the respective IR-receiver. By help of gesture recognition, it is determined to which electronic device the respective user is pointing and accordingly desires to control.

Following the trend of modern human machine interfaces, it is very likely to find more and more home productions in near future which will be controlled by gesture or speech recognition. This trend will be true for modern multimedia devices like set top boxes, audio and video recorders and players, too. However, a typical multimedia device displays control information on a shared display screen which may be a television screen. It is a very common behavior for users, when interacting with displayed control information, to face and look at the screen when entering response commands to the displayed control information. However, gesture control is preferably done in the direction of the device which is to be controlled. In a modern multimedia environment comprising a plurality of multimedia devices, there might be a problem for gesture recognition. On the one hand, the respective multimedia device has to identify gestures that are associated to the control of the respective multimedia device. On the other hand, gestures which are not associated to the control of the respective device have to be ignored in order to provide a reliable control of the multimedia device.

### SUMMARY

It is an object of the invention to provide a multimedia device, a multimedia environment and a method for controlling a multimedia device providing an improved human machine interface for control of the multimedia device.

According to an aspect of the invention, a method for controlling a multimedia device in a multimedia environment comprising a display device and the multimedia device is provided. The display device and the multimedia device are coupled and configured in that, control information of the multimedia device may be displayed at the display device. The multimedia environment further comprises a sensor for acquisition of audio and/or video information. The sensor is coupled to the multimedia device that is further configured to perform gesture and/or speech recognition based on the acquired audio and/or video information. A wake-up event that is assigned to activation of the multimedia device is detected first. The respective wake-up event is initiated by a user of the multimedia environment. Detection of the wake-up event is based on the acquired audio and/or video information. Upon detection of the pre-determined wake-up event, the multimedia device is set to an active state. Subsequently, a position of the user in the multimedia environment, in other words, the location of the user relative to the multimedia equipment, i. e. relative to the display device and the multimedia device, is determined. Further, a viewing direction of the user is determined. It is understood that both, the position and the viewing direction may be determined. The determination of the position as well as the determination of the viewing direction of the user is based on acquired video information. Subsequently, a filtered gesture recognition which is based on subsequently acquired video information is performed. The step of filtering is based on information relative to the determined position and/or the determined viewing direction of the user.

The method according to aspects of the invention provides a more reliable control of a multimedia device that is based on gesture recognition, especially in complex multimedia environments comprising a plurality of multimedia devices. The filtered gesture recognition is performed for example by filtering the video information itself. It is also possible to filter the results of the gesture recognition by taking into account the respective information about the user of the multimedia environment.

According to one aspect of the invention, all the above described steps are performed by the multimedia device. According to another aspect of the invention, the above described steps of detecting a wake-up event, determining a position and viewing direction of a user and filtering gesture recognition are performed by other devices of the multimedia environment. Further, one of these devices might perform the filtered gesture recognition on behalf of another device. According to a further aspect of the invention, the multimedia environment comprises multiple sensors for acquisition of audio and/or video information.

Preferably, the position of the user in the multimedia environment and/or the viewing direction of the user are/is determined based on video information that is acquired directly subsequent to the detection of the wake-up event. In other words, the position and/or the viewing direction are/is determined directly upon detection of the wake-up event, i. e. at approximately the same moment in time. For example, this pre-determined and unique wake-up event may be a specific sound or a pre-defined gesture command. It is also possible to combine the specific sound with a specific gesture command as a unique wake-up event.

According to an aspect of the invention, a current viewing direction of the user may be determined in subsequently acquired video information. In other words, the current viewing direction is determined based on video information that is acquired after the detection of the wake-up event. Certain video information may be excluded from gesture recognition, wherein in the excluded video information, the current viewing direction of the user significantly differs from the previously determined viewing direction. Advantageously, the gesture recognition process takes into account the orientation of the user with respect to the control screen. Gestures of the user are taken into account only if he or she faces the control screen which displays the control information of the multimedia device. Accordingly, the multimedia device may discriminate between essential and dispensable or non-essential gesture information and the quality of the gesture recognition process may be improved.

According to another aspect of the invention, a current position of the user is determined in subsequently acquired video information. In other words, the multimedia device discriminates between the position of the user which has been detected directly subsequent to the wake-up event and the user's position in later acquired video information. Certain video information may be excluded from gesture recognition, wherein in the excluded video information, the current position of the user significantly differs from the originally determined position of the user. This aspect of the invention represents a further measure towards a reliable recognition of the user's gestures. The user's gestures will be interpreted as a human machine interaction only if the user finds himself in the position where he or she initially started the multimedia device by help of the respective wake-up event. This may be advantageous if the user for example carries out further movements or gestures which are not meant as gestures for control of the multimedia device. For example, the user may insert a DVD or Blu-ray disk after starting the multimedia device. Of course, this action should not disturb the control of the multimedia device.

According to an embodiment of the invention, a main user of the multimedia environment is determined if a plurality of users is detected in the acquired video information. The determination of the position of the user and/or the determination of the viewing direction of the user is advantageously restricted to this main user. The main user may be determined by sending a request to the users of the multimedia environment, preferably via the control information that is displayed on the display device. A subsequent answer is detected by performing gesture recognition in subsequent video information. Preferably, a certain gesture may be defined for this purpose. For example, the user who is in charge of controlling the multimedia device may raise his or her arm as a response to the request. After sending the request and detecting the respective answer, the user who performs the answer is allocated to the status of the main user. This allocation will prevent the multimedia device from being confused by gestures which are not performed by the main user but by further passive users and will therefore enhance the reliability of gesture recognition.

According to an aspect of the invention, a multimedia device for use in a multimedia environment is provided. The multimedia environment further comprises a display device which is configured to be coupled to the multimedia device for a display of control information of the multimedia device. The multimedia device is further configured to be coupled to a sensor for acquisition of audio and/or video information and is further configured to perform gesture and/or speech recognition based in the acquired audio and/or video information. Preferably, this audio and/or video sensor is an integral part of the multimedia device. The multimedia device will detect a wake-up event that is assigned to activation of the multimedia device and that is initiated by a user of the multimedia environment. The detection of the wake-up event is based on acquired audio and/or video information. Subsequently, the multimedia device is set to an active state, upon detection of the pre-determined wake-up event. A position of the user in the multimedia environment and/or a viewing direction of the user may be determined based on the acquired video information. Filtered gesture recognition is performed based on subsequently acquired video information. Filtering is based on information relative to the determined position of the user in the multimedia environment and/or the determined viewing direction of the user.

According to another aspect of the invention, a multimedia environment comprising a display device and a multimedia device is provided. The display device and the multimedia device are coupled and configured in that control information of the multimedia device may be displayed at the display device. The multimedia environment further comprises a sensor for acquisition of audio and/or video information. The sensor is coupled to the multimedia device that is further configured to perform a gesture and/or speech recognition based on the acquired audio and/or video information. The multimedia device is configured to detect a wake-up event that is assigned to activation of the multimedia device and that is initiated by user of the multimedia environment. Detection of the wake-up event is based on acquired audio and/or video information. The multimedia device is set to an active state upon detection of the pre-determined wake-up, which may be a specific sound and/or a specific gesture command. Further, a position of the user in the multimedia environment and/or a viewing direction of the user are/is determined based on acquired video information. Filtered gesture recognition is performed based on subsequently acquired video information wherein the step of filtering is based in information relative to the determined position of the user in the multimedia environment and/or the determined viewing direction of the user. It is understood that the multimedia environment might also comprise further devices, like for example a second display device, a recording device, an optical disc player or an audio playback device.

Same or similar advantages which have been already mentioned with respect to the method for controlling the multimedia device also apply to the multimedia device and to the multimedia environment.

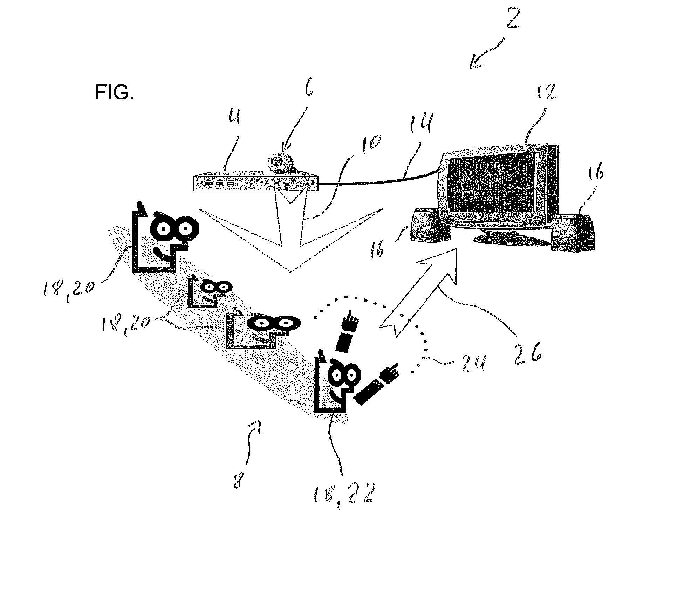

### BRIEF DESCRIPTION OF THE DRAWING

Further aspects of the invention will ensue from the following description of example embodiments with reference to the accompanying drawing, wherein the figure is a simplified multimedia environment comprising a multimedia device, a sensor and a display device.

### DETAILED DESCRIPTION OF AN EXAMPLE EMBODIMENT

The figure is a simplified perspective view to a multimedia environment 2. This multimedia environment 2 comprises a multimedia device 4, for example a set top box like a DVD- or Blu-ray-player, a DVB-S or DVB-T receiver or the like. Further, an audio and/or video sensor 6 which may be a webcam is a part of the multimedia environment 2. The audio and/or video sensor 6 is a separate unit and is coupled to the multimedia device 4. However, according to another embodiment, the sensor may be included in the multimedia device 4 and is an integral part thereof. The audio and/or video sensor 6 is aligned to a capture direction 10 and detects audio and/or video information of an audience 8. Further, the multimedia environment 2 comprises a display device 12 which may be a plasma, TFT, LCD or LED screen. The multimedia device 4 and the display device 12 are coupled via a suitable link 14, e. g. a wired link like a USB, SCART or HDMI cable or a wireless link. Control information of the multimedia device 4 may be displayed on the display device 12. For example, control information may be a user menu comprising set up information for the multimedia device 4 or information on data content of a media which is designated for reproduction by the multimedia device 4, e. g. a typical DVD or Blu-ray menu. The multimedia environment 2 further comprises a sound system, e. g. a conventional stereo system or a Dolby 5.1 sound system. By way of an example only, two loud speakers 16 are depicted in the figure. It is understood that the multimedia environment may comprise further multimedia devices. These further devices may be controlled in a similar way as it will be outlined in the following - for the sake of clarity only - for a single multimedia device 4.

An audience 8 consisting of a plurality of users 18 makes use of the multimedia environment 2. The audience 8 comprises more or less passive users 20 and a single main user 22 who is in charge of controlling the multimedia device 4. The multimedia environment 2 and the multimedia device 4 are controlled by gesture recognition and or voice control. In prior art multimedia environments, gesture recognition works best if a user 18 faces the video sensor 6 directly. In other words, a user 18 needs to look at the respective multimedia device 4 if he or she wants to control the same by gesture control. However, this demands for the multimedia device 4 being placed in the vicinity of a display device 12 because the user 18 performs gesture control in reaction to control information that is displayed on the display device 12. However, it may be desirable to place the multimedia device 4 at a certain distance from the display device 12. If a plurality of multimedia devices 4 (not shown) is present in a multimedia environment 2, all multimedia devices 4 have to be placed in the vicinity of the display device 12 which may not be desired by the user 18 of the multimedia environment 2.

According to the embodiment in the figure, one of the users 18, i. e. the active user 22, initiates a wake-up event, which may be a specific sound and or a specific gesture command. Upon detection of this wake-up event, which is detected based on audio and/or video information that is acquired by the sensors 6, the multimedia device 4 is set to an active state. By analyzing audio and/or video information which is acquired directly subsequent to detection of the wake-up event, a position 24 and a viewing direction 26 of the main user 22 may be determined. In the embodiment of the figure there is a plurality of users 18. The multimedia device 4 has to discriminate between passive users 20 and the main user 22 who is entitled to control multimedia environment 2. This may be performed by sending a suitable request to the users 18, for example a certain audio command via the speakers 16 or suitable information which is displayed on the display device 12. An answer, for example a certain gesture, is detected subsequently. Detection will be based on video information which is acquired by the sensor 6 wherein the specific answer or gesture identifies the user 18 sitting at the right place of the audience 8 as the main user 22. In other words, this specific user 18 is allocated to the status of the main user 22. In subsequently acquired video information, gestures of the main user 22 only will be taken into account for gesture recognition. Advantageously, the passive users 20 are not able to disturb the human machine interaction i. e. the control of the multimedia device 4.

Further, an actual viewing direction of the main user 22 is determined based on subsequently acquired video information. In other words, the main user 22 controls the multimedia device 4 or the multimedia environment 2 only if he or she is directly looking at the display device 12. This will enhance the control of the multimedia environment 2. For example, if the main user 22 is looking at one of the passive users 20, talking to him or her and for example by instance performs one or more gestures, these gestures will not be interpreted by gesture recognition and no misleading commands will disturb the control of the multimedia environment 2. There is filtered gesture recognition in the multimedia environment 2 which is performed by the multimedia device 4 taking into account the determined position 24 and the determined viewing direction 26 of a main user 22. Gesture recognition will be restricted to the main user 22 by disregarding gestures which are performed by one or more of the passive users 20. In order to enhance controllability of the multimedia device 4, there may be a tunable waiting period letting the active user 22 submit one or control gesture commands after detection of the wake-up event.

Although the invention has been described hereinabove with reference to a specific embodiment, it is not limited to this embodiment and no doubt further alternatives will occur to the skilled person that lie within the scope of the invention as claimed.

## Claims

1. A method for controlling a multimedia device (4) in a multimedia environment (2) comprising a display device (12) and the multimedia device (4), wherein the display device (12) and the multimedia device (4) are coupled and configured in that control information of the multimedia device (4) may be displayed at the display device (12), the multimedia environment further comprises a sensor (6) for acquisition of audio and/or video information, wherein the sensor (6) is coupled to the multimedia device (4) that is configured to perform gesture and/or speech recognition based on the acquired audio and/or video information, the method comprising the steps of:
a) detecting a wake-up event that is assigned to activation of the multimedia device (4) and that is initiated by a user (18) of the multimedia environment (2), wherein detection of the wake-up event is based on acquired audio and/or video information,
b) setting the multimedia device (4) to an active state upon detection of the predetermined wake-up event,
c) determining a position (24) of the user (18, 22) in the multimedia environment (2) and/or a viewing direction (26) of the user (18, 22), based on acquired video information and
d) performing a filtered gesture recognition based on subsequently acquired video information, wherein the step of filtering is based on information relative to the determined position (24) of the user (18, 22) in the multimedia environment (2) and/or the determined viewing direction (26) of the user (18, 22).

2. The method of controlling a multimedia device (4) according to claim 1, wherein the position (24) of the user (18, 22) in the multimedia environment (2) and/or the viewing direction (26) of the user (18, 22) is determined based on video information that is acquired directly subsequent to the detection of the predetermined wake-up event.

3. The method of controlling a multimedia device (4) according to claim 1 or 2, wherein the step of filtered gesture recognition comprises:
a) determining a current viewing direction of the user (18, 22) in the subsequently acquired video information and
b) excluding certain video information from gesture recognition, wherein in the excluded video information, the current viewing direction of the user (18, 22) significantly differs from the determined viewing direction of the user (18, 22).

4. The method of controlling a multimedia device (4) according to one of the preceding claims, wherein the step of filtered gesture recognition comprises:
a) determining at current position of a user (18, 22) in the subsequently acquired video information and
b) excluding certain video information from gesture recognition, wherein in the excluded video information, the current position of the user (18, 22) significantly differs from the determined position (24) of the user (18, 22).

5. The method of controlling a multimedia device (4) according to one of the preceding claims, further comprising the step of determining a main user (22) of the multimedia environment (2) if a plurality of users (18) is detected in the acquired video information, wherein the determination of the position (24) of the user (18, 22) and/or the determination of the viewing direction (26) of the user (18, 22) is restricted to the main user.

6. The method of controlling a multimedia device (4) according to claim 5, wherein the step of determining a main user comprises:
a) sending a request to the users (18) of the multimedia environment (2),
b) detecting an answer by performing gesture recognition in subsequent video information and
c) allocating the user (18) who performs the answer to the status of the main user (22).

7. A multimedia device (4) for use in a multimedia environment (2) further comprising a display device (12), wherein the multimedia device (4) is configured to be coupled to the display device (12) for display of control information of the multimedia device (4) and wherein the multimedia device (4) is configured to be coupled to a sensor (6) for acquisition of audio and/or video information and wherein the multimedia device (4) is further configured to perform gesture and/or speech recognition based on the acquired audio and/or video information, wherein the multimedia device (4) is configured to:
a) detect a wake-up event that is assigned to activation of the multimedia device (4) and that is initiated by a user (18) of the multimedia environment (2), wherein detection of the wake-up event is based on acquired audio and/or video information,
b) set the multimedia device (4) to an active state upon detection of the predetermined wake-up event,
c) determine a position (24) of the user (18, 22) in the multimedia environment (2) and/or a viewing direction (26) of the user (18, 22), based on acquired video information and
d) perform a filtered gesture recognition based on subsequently acquired video information, wherein the step of filtering is based on information relative to the determined position (24) of the user (18, 22) in the multimedia environment (2) and/or the determined viewing direction (26) of the user (18, 22).

8. The multimedia device (4) according to claim 7, wherein the sensor (6) is an integral part of the multimedia device (4).

9. A multimedia environment (2) comprising a display device (12) and a multimedia device (4), wherein the display device (12) and the multimedia device (4) are coupled and configured in that control information of the multimedia device (4) may be displayed at the display device (12), the multimedia environment (2) further comprising a sensor (6) for acquisition of audio and/or video information, wherein the sensor (6) is coupled to the multimedia device (4) that is configured to perform gesture and/or speech recognition based on the acquired audio and/or video information, wherein the multimedia device (4) is configured to:
a) detect a wake-up event that is assigned to activation of the multimedia device (4) and that is initiated by a user (18) of the multimedia environment (2), wherein detection of the wake-up event is based on acquired audio and/or video information,
b) set the multimedia device (4) to an active state upon detection of the predetermined wake-up event,
c) determine a position (24) of the user (18, 22) in the multimedia environment (2) and/or a viewing direction (26) of the user (18, 22), based on acquired video information,
d) perform a filtered gesture recognition based on subsequently acquired video information, wherein the step of filtering is based on information relative to the determined position (24) of the user (18, 22) in the multimedia environment (2) and/or the determined viewing direction (26) of the user (18, 22).
